# EUROPÄISCHE PATENTSCHRIFT

(11) **EP 3 267 133 B1**
(45) Veröffentlichungstag und Bekanntmachung des Hinweises auf die Patenterteilung: **30.03.2022**
(21) Anmeldenummer: 17176892.2
(22) Anmeldetag: 20.06.2017
(51) Int. Cl.: B01D 35/153, F25D 23/12

(54) **WASSERFILTERBAUGRUPPE UND EIN DAMIT AUSGESTATTETES KÄLTEGERÄT**
WATER FILTER ASSEMBLY AND A COOLING DEVICE EQUIPPED WITH IT
MODULE DE FILTRE À EAU ET UN APPAREIL DE FROID EN ÉTANT ÉQUIPÉ

(30) Priorität: 08.07.2016 DE 102016212531
(43) Veröffentlichungstag der Anmeldung: 10.01.2018
(73) Patentinhaber: BSH Hausgeräte GmbH, 81739 München (DE)
(72) Erfinder: Gaplikow, Eugen, 89347 Bubesheim (DE); Laible, Karl-Friedrich, 89129 Langenau (DE)

(56) Entgegenhaltungen:
- EP-A2- 2 407 739
- US-A- 5 290 442
- US-A1- 2012 042 677
- US-A1- 2012 285 192

## Beschreibung

Die vorliegende Erfindung betrifft eine Wasserfilterbaugruppe für ein Kältegerät, insbesondere ein Haushaltskältegerät wie etwa ein Kühlschrank oder eine Kühl-Gefrier-Kombination, das an ein Wasserleitungsnetz angeschlossen ist, um einen in das Kältegerät integrierten Kaltwasserspender, einen Eisbereiter oder dergleichen zu versorgen.

Solche Kältegeräte müssen durch ein Rückschlagventil gegen das Zurückfließen von Wasser aus dem Gerät in das Leitungsnetz gesichert sein.

Aus KR 10 2009 007 7392 A ist eine Wasserfilterbaugruppe für ein Kältegerät bekannt, bei dem ein Rückschlagventil in einen Filterkopf integriert ist, in dem eine Filterkartusche lösbar verankert ist. Da der Filterkopf Durchlässe sowohl für den Zugang des Frischwassers zur Filterkartusche als auch für den Abfluss des gefilterten Wassers und Mittel zur Verankerung der Filterkartusche aufweisen muss, ist es kompliziert geformt und dementsprechend aufwändig zu fertigen, und die Integration des Rückschlagventils macht kostspielige Änderungen an den zur Fertigung des Filterkopfs verwendeten Werkzeugen erforderlich. Wenn bei einem kompakt konstruierten Filterkopf der für das Rückschlagventil benötigte zusätzliche Platz nicht bereitgestellt werden kann, ohne die äußere Gestalt des Filterkopfs zu ändern, können sogar Folgeänderungen am Gehäuse eines Kältegeräts erforderlich werden, in das der Filterkopf eingebaut wird.

Die US 2012/042677 A1 offenbart eine Wasserfilterbaugruppe mit einer austauschbaren Filterpatrone und einem einen Verteiler und ein Ventil fluidisch verbindenden Leitungselement. Mittels des Ventils ist das Leitungselement fluidisch blockierbar, wenn die Filterpatrone aus einem Gehäuse der Wasserfilterbaugruppe entfernt ist, um ein Hineinfließen von Wasser in das Gehäuse zu verhindern. Das Ventil kann als ein Rückschlagventil ausgebildet sein.

Ferner offenbart die US 2012/285192 A1 eine Wasserfilterbaugruppe mit einem austauschbaren Wasserfilter und einem Rückschlagventil, das eine Wassereintrittsleitung daran hindert, dem Wasserfilter Wasser bereitzustellen, wenn eine Wartungsklappe der Wasserfilterbaugruppe geöffnet ist.

Die EP 2 407 739 A2 offenbart ein Gehäuse in dem ein Wassertank, Wasserfilter und Schaltventil untergebracht ist. Das Gehäuse ist zwischen Schubladen in einem Lagerraum angeordnet.

Die US 5,290,442 B offenbart einen Wasseraufbereitungsapparat mit einer Filterpartrone und einem ausgangsseitig an der Filterpatrone angeordneten Verteiler. In dem Verteiler ist ein Einwegeventil vorgesehen.

Aufgabe der vorliegenden Erfindung ist, eine Wasserfilterbaugruppe mit integriertem Rückschlagventil zu schaffen, die kostengünstig realisierbar ist und dessen Einbau in ein existierendes Kältegerätegehäuse keine oder allenfalls geringfügige Anpassungen des Gehäuses erfordert.

Die vorliegende Erfindung ist im unabhängigen Anspruch 1 offenbart. Weitere Ausführungsbeispiele sind in den abhängigen Ansprüchen offenbart.

Die Aufgabe wird zum einen gelöst, indem bei einer Wasserfilterbaugruppe nach Anspruch 1 mit einem Einlassanschluss, einem Filterkopf, an dem ein Wasserfilter montierbar ist, einem Rückschlagventil und einem Auslassanschluss, das Rückschlagventil mit dem Filterkopf über einen Schlauch verbunden ist.

Erfindungsgemäß ist an der für das Rückschlagventil gewählten Stelle ein Ende des Schlauchs und an diesem einen Kupplungskörper zum Verbinden des Schlauchs mit einer weiterführenden, nicht der Baugruppe angehörenden Leitung vorgesehen; in einer Durchgangsbohrung des Kupplungskörpers ist das Rückschlagventil dann durch Einführen von einem offenen Ende her einfach zu montieren.

Erfindungsgemäß bildet der Kupplungskörper den Einlassanschluss der Baugruppe, so kann das Rückschlagventil auch den Filter vom Leitungsnetz trennen.

Der Schlauch ist an einem ohnehin für den Zu- oder Abfluss von Wasser vorhandenen Anschluss des Filterkopfs angebracht worden, ohne dass dafür Anpassungen des Filterkopfs erforderlich wären; ein existierender Filterkopf kann daher in der erfindungsgemäßen Wasserfilterbaugruppe unverändert weiter verwendet werden. Der Schlauch bietet die Freiheit, das Rückschlagventil an einer Stelle im Kältegerät zu platzieren, an der dessen Platzbedarf relativ einfach und ohne die Notwendigkeit, komplizierte und aufwändig zu fertigende Bauteile anzupassen, befriedigt werden kann.

Die Wasserfilterbaugruppe kann mit eingefügtem Rückschlagventil vorkonfektioniert der Kältegerätefertigung zugeliefert werden; da folglich Filterkopf und Rückschlagventil zusammen eingebaut werden, kann beim Zusammenbau des erfindungsgemäßen Kältegeräts ein Montageschritt eingespart werden.

In einer ersten Richtung kann das Rückschlagventil in der Durchgangsbohrung durch einen sich in einer Nut der Durchgangsbohrung abstützenden Sperrring gesichert sein, insbesondere um ein Herausfallen des Rückschlagventils aus der Durchgangsbohrung vor dem Einbau der Wasserfilterbaugruppe in einem Kältegerät, zu verhindern. Vorzugsweise ist die erste Richtung zur Flussrichtung des Wassers entgegengesetzt, so dass der Sperrring nicht dem Wasserdruck standzuhalten braucht.

Um das Rückschlagventil gegen Herausfallen vor dem Einbau der Wasserfilterbaugruppe zu sichern, kann es auch ausreichen, wenn das Rückschlagventil in der Durchgangsbohrung reibschlüssig gehalten oder geklemmt ist.

In einer zweiten Richtung ist das Rückschlagventil in der Durchgangsbohrung vorzugsweise durch eine Verengung der Durchgangsbohrung gesichert. Eine solche Sicherung kann das Rückschlagventil auch entgegen dem Wasserdruck zuverlässig am Platz halten.

Gegenstand der Erfindung ist ferner ein Kältegerät, insbesondere ein Haushaltskältegerät, mit einer Wasserfilterbaugruppe wie oben beschrieben.

Bei einem solchen Kältegerät kann der Einlassanschluss der Wasserfilterbaugruppe außen am Kältegerät zugänglich sein, um direkt mit dem Wasserleitungsnetz eines Gebäudes verbunden zu werden.

Alternativ kann der Einlassanschluss der Wasserfilterbaugruppe mit einem äußeren Einlassanschluss des Kältegeräts über eine gerätefeste Zuleitung verbunden sein, dann kann das Rückschlagventil in der Durchgangsbohrung entgegen der Flussrichtung des Wassers durch eine Kupplung am stromabwärtigen Ende der gerätefesten Zuleitung gesichert sein.

Weitere Merkmale und Vorteile der Erfindung ergeben sich aus der nachfolgenden Beschreibung von Ausführungsbeispielen unter Bezugnahme auf die beigefügten Figuren. Alle Ausführungsbeispiele offenbaren alle technische Merkmale des unabhängigen Anspruchs 1, die wesentlich für die vorliegende Erfindung sind.

Es zeigen:
- Fig. 1: eine erfindungsgemäße Wasserfilterbaugruppe;
- Fig. 2: einen Längsschnitt durch einen Kupplungskörper der Wasserfilterbaugruppe;
- Fig. 3: einen schematischen vertikalen Schnitt durch den Korpus eines mit der erfindungsgemäßen Wasserfilterbaugruppe versehenen Kältegeräts;
- Fig. 4: einen alternativen Schnitt durch den Korpus des Kältegeräts;
- Fig. 5: einen Längsschnitt durch den an eine gerätefeste Leitung des Kältegeräts angeschlossenen Kupplungskörper;
- Fig.6: einen zu Fig. 2 analogen Längsschnitt gemäß einer zweiten Ausgestaltung der Erfindung; und
- Fig. 7: einen zu Fig. 2 analogen Längsschnitt gemäß einer dritten Ausgestaltung.

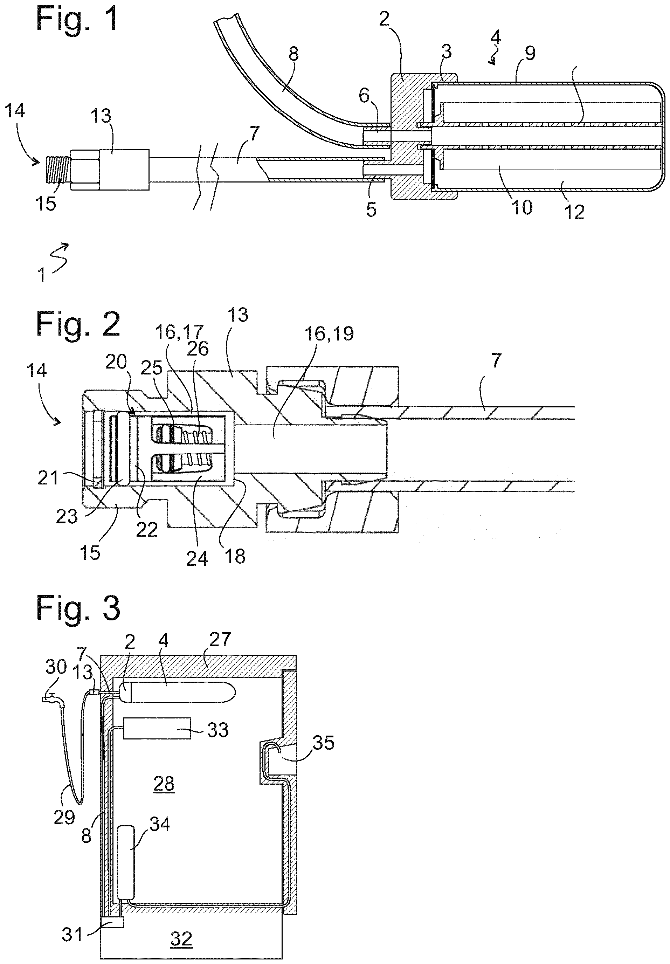

Fig. 1 zeigt eine Wasserfilterbaugruppe für den Einbau in einem Kältegerät. Ein Filterkopf 2 hat an einer Seite eine Aufnahme 3, in der ein Wasserfilter 4 verschraubt oder durch eine Bajonettkupplung lösbar und wasserdicht verankert ist, und an der gegenüberliegenden Seite zwei Anschlussstutzen 5, 6, an denen Schläuche 7, 8 befestigt sind. Der Wasserfilter 4 hat ein becherförmiges Gehäuse 9, auf dessen Längsachse sich fluchtend mit dem Anschlussstutzen 6 ein vielfach durchbrochenes, von einem porösen Filterkörper 10 umgebenes Rohr 11 erstreckt. Der Schlauch 8 ist über den Anschlussstutzen 6 mit dem Innern des Rohrs 11 verbunden, der Schlauch 7 über den Anschlussstutzen 5 mit einem den Filterkörper 10 im Gehäuse 9 ringförmig umgebenden Freiraum 12. Ein Kupplungskörper 13 am vom Filterkopf 2 abgewandten Ende des Schlauchs 7 bildet einen Einlassanschluss 14 der Filterbaugruppe. Ein Schraubgewinde 15 am vom Schlauch 7 abgewandten Ende des Kupplungskörpers 13 ist zum Verschrauben mit einer Wasser zuführenden Leitung vorgesehen.

Fig. 2 zeigt einen Längsschnitt durch den Kupplungskörper 13. Der Kupplungskörper 13 hat eine Durchgangsbohrung 16 mit einem zum vom Schlauch 7 abgewandten Ende des Kupplungskörpers hin offenen weiten Abschnitt 17 und, von diesem durch eine Verengung 18 abgesetzt, einem in den Schlauch 7 eingreifenden engen Abschnitt 19.

In den weiten Abschnitt 17 ist von dem offenen Ende her ein Rückschlagventil 20 eingeschoben und durch einen Sperrring 21 gesichert, der in eine umlaufende Nut an der Wand des weiten Abschnitts 17 eingreift. Durch den Sperrring 21 ist das Rückschlagventil 20 in der Wasserfilterbaugruppe bereits vor deren Einbau in einem Kältegerät unverlierbar gesichert; die Wasserfilterbaugruppe eignet sich daher gut, um an einem von der Fertigung des Kältegeräts entfernten Ort, insbesondere bei einem Zulieferbetrieb, vollständig vormontiert und der Kältegerätefertigung zugeliefert zu werden.

Das Rückschlagventil 20 hat einen ringförmigen Ventilsitz 22 mit einer umlaufenden Nut. Ein in der Nut aufgenommener Dichtring 23 versperrt einen Spalt zwischen dem Ventilsitz 22 und der umgebenden Wand des Kupplungskörpers 13. In einem in Durchgangsrichtung des Wassers vom Ventilsitz 22 abstehenden Korb 24 sind ein Schließkörper 25 und eine Feder 26 untergebracht, die den Schließkörper 25 gegen den Ventilsitz 22 beaufschlagt.

Fig. 3 zeigt einen schematischen Schnitt durch ein mit der Wasserfilterbaugruppe der Fig. 1 ausgestattetes Haushaltskältegerät gemäß einer ersten Ausgestaltung der Erfindung. Der Schlauch 7 ist hier im Gerät fest verlegt und erstreckt sich durch eine Wärmedämmschicht 27 des Geräts zwischen dem außen an einer Rückwand des Geräts zugänglichen Kupplungskörper 13 einerseits und dem Filterkopf 2 und dem Wasserfilter 4 andererseits, die in einem von der Wärmedämmschicht 27 umschlossenen gekühlten Innenraum 28 des Geräts angeordnet sind. Der Kupplungskörper 13 ist über einen außerhalb des Geräts verlaufenden Schlauch 29 an das Wasserleitungsnetz 30 angeschlossen.

Der Schlauch 8 verläuft vom Filterkopf 2 durch die Wärmedämmschicht 27 zu einer Verteilerventilbaugruppe 31 im Maschinenraum 32 des Geräts. Von dort ausgehende Leitungen führen zu einem Eisbereiter 33 und, über einen gekühlten Vorratstank 34, zu einem Wasserspender 35.

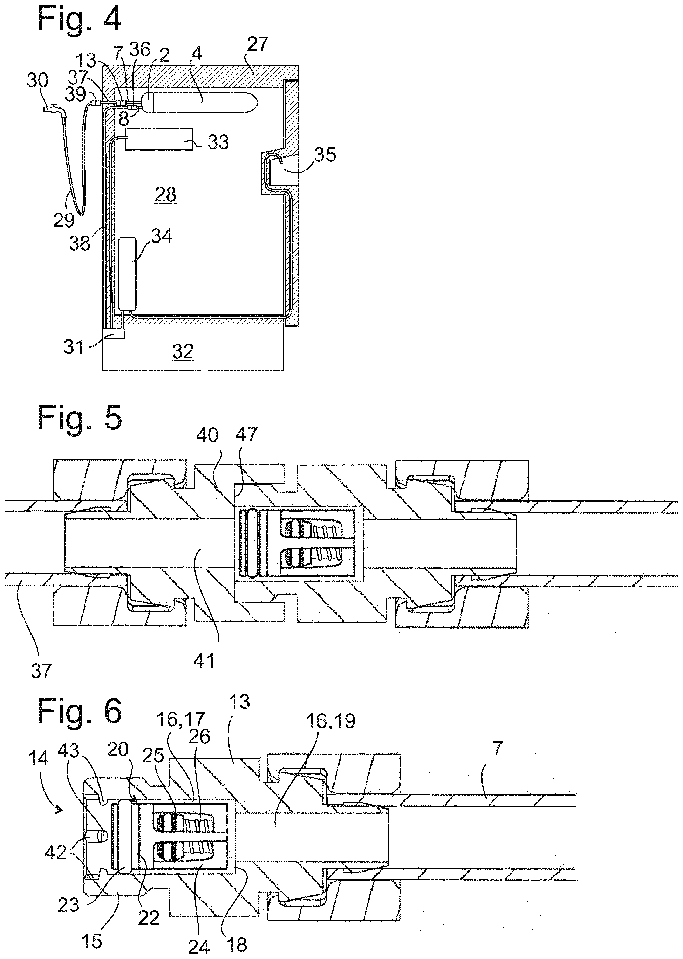

In der Ausgestaltung der Fig. 4 erstrecken sich die Schläuche 7, 8 der Wasserfilterbaugruppe nur bis zu Kupplungskörpern 13, 36 im gekühlten Innenraum 28 des Geräts und sind mit fest in dessen Wänden verlaufenden Leitungen 37, 38 verbunden, von denen die eine 37 zu einer an der Rückseite des Geräts zugänglichen, mit dem Wasserleitungsnetz 30 verbundenen Kupplung 39 und die andere 38 zur Verteilerventilbaugruppe 31 führt. Bei dieser Ausgestaltung kann der Einbau der Wasserfilterbaugruppe aufgeschoben werden, bis das Gehäuse des Geräts einschließlich der Wärmedämmschicht 27 komplett montiert ist.

Bei dieser Ausgestaltung kann der Sperrring 21 entfallen und dessen Aufgabe, das Rückschlagventil 20 entgegen der Flussrichtung des Wassers unbeweglich zu halten, wie in Fig. 5 gezeigt von einem zum Kupplungskörper 13 komplementären, hier schraubverbundenen, Kupplungskörper 40 der Leitung 37 übernommen werden, dessen Durchgangsbohrung 41 enger als der Durchmesser des Rückschlagventils 20 ist. Um bis zum Einbau der Wasserfilterbaugruppe das Rückschlagventil 20 im Kupplungskörper 13 zu sichern, kann hier ein Reibschluss des Dichtrings 23 in der Durchgangsbohrung 16 oder eine anderweitige Art, das Rückschlagventil 20 in der Durchgangsbohrung 16 zu klemmen, ausreichen.

Fig. 6 zeigt einen Längsschnitt durch einen Kupplungskörper 13' gemäß einer zweiten Ausgestaltung der Erfindung nach Anspruch 1. Die äußere Gestalt des Kupplungskörper 13' gleicht dem Kupplungskörper 13 der Fig.2, und in beiden Figuren gleiche Bezugszeichen bezeichnen identische Komponenten. Die Nut und der Sperrring 21 am offenen Ende der Durchgangsbohrung 16 sind hier entfallen; stattdessen ist das Rückschlagventil 20 gegen ein Entweichen über das offene Ende gesichert, indem nach dem Einführen des Rückschlagventils 20 ein Werkzeug in das offene Ende hineingepresst worden ist, das in der Wand des weiten Abschnitts 17 axiale Nuten 42 geformt und das dabei verlagerte Material zu Vorsprüngen 43 zusammengeschoben hat, die dem Rückschlagventil 20 den Weg ins Freie versperren.

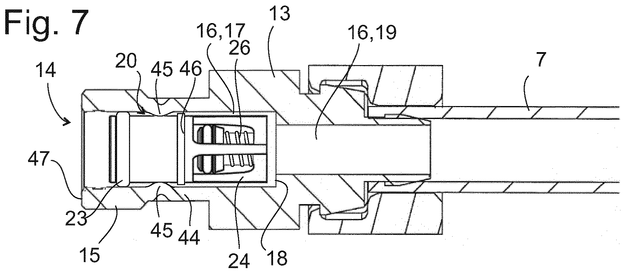

Fig. 7 zeigt einen Längsschnitt durch einen Kupplungskörper 13" gemäß einer drittten Ausgestaltung der Erfindung nach Anspruch 1. Wiederum bezeichnen gleiche Bezugszeichen Komponenten, die mit denen der zuvor beschriebenen Ausgestaltungen identisch sind.

Der Abstand zwischen dem Schraubgewinde 15 und der Verengung 18 ist hier vergrößert, um Platz für einen dünnwandigen Rohrabschnitt 44 zu schaffen. Dieser Rohrabschnitt 44 ist nach dem Einführen des Rückschlagventils 20 lokal zusammengedrückt, um in den weiten Abschnitt 17 der Durchgangsbohrung 16 eingreifende Vorsprünge 45 zu formen, die das Rückschlagventil 20 formschlüssig sichern. Das Rückschlagventil 20 kann axial verlängert sein, so dass die Vorsprünge 45 am Umfang des Rückschlagventils 20 zwischen dem Dichtring 23 und einem zweiten vorspringenden Ring 46 eingreifen können; in Frage kommt aber auch, den Rohrabschnitt 44 so lang zu machen, dass die Vorsprünge 45 wie die Vorsprünge 43 der Fig. 6 zwischen dem Rückschlagventil 20 und dem offenen Ende in die Durchgangsbohrung 16 eingreifen. Der Kupplungskörper 13" ist zwar weniger kompakt als die Kupplungskörper 13 oder 13', hat aber gegenüber dem Kupplungskörper 13' den Vorteil, dass keine Gefahr einer Beeinträchtigung einer sich um das offene Ende erstreckenden Dichtfläche 47 durch das Formen der Vorsprünge 45 besteht.

### Bezugszeichen

- 1: Wasserfilterbaugruppe
- 2: Filterkopf
- 3: Aufnahme
- 4: Wasserfilter
- 5: Anschlussstutzen
- 6: Anschlussstutzen
- 7: Schlauch
- 8: Schlauch
- 9: Gehäuse
- 10: Filterkörper
- 11: Rohr
- 12: Freiraum
- 13: Kupplungskörper
- 14: Einlassanschluss
- 15: Schraubgewinde
- 16: Durchgangsbohrung
- 17: weiter Abschnitt
- 18: Verengung
- 19: enger Abschnitt
- 20: Rückschlagventil
- 21: Sperrring
- 22: Ventilsitz
- 23: Dichtring
- 24: Korb
- 25: Schließkörper
- 26: Feder
- 27: Wärmedämmschicht
- 28: Innenraum
- 29: Schlauch
- 30: Wasserleitungsnetz
- 31: Verteilerventilbaugruppe
- 32: Maschinenraum
- 33: Eisbereiter
- 34: Vorratstank
- 35: Wasserspender
- 36: Kupplungskörper
- 37: Leitung
- 38: Leitung
- 39: Kupplung
- 40: Kupplungskörper
- 41: Durchgangsbohrung
- 42: Nut
- 43: Vorsprung
- 44: Rohrabschnitt
- 45: Vorsprung
- 46: Ring
- 47: Dichtfläche

## Patentansprüche

1. Wasserfilterbaugruppe (1) für ein Kältegerät mit einem Einlassanschluss (14), einem Filterkopf (2), an dem ein Wasserfilter (4) montierbar ist, einem Rückschlagventil (20) und einem Auslassanschluss, wobei das Rückschlagventil (20) mit dem Filterkopf (2) über einen Schlauch (7) verbunden ist, **dadurch gekennzeichnet, dass** das Rückschlagventil (20) in eine Durchgangsbohrung (16) eines Kupplungskörpers (13) am Ende des Schlauchs (7) eingeführt ist, wobei der Kupplungskörper (13) den Einlassanschluss (14) bildet.

2. Wasserfilterbaugruppe (1) nach Anspruch 1, **dadurch gekennzeichnet, dass** das Rückschlagventil (20) in der Durchgangsbohrung (16) formschlüssig gesichert ist.

3. Wasserfilterbaugruppe (1) nach einem der Ansprüche 1 bis 2, **dadurch gekennzeichnet, dass** das Rückschlagventil (20) in der Durchgangsbohrung (16) in einer ersten Richtung durch einen sich in einer Nut der Durchgangsbohrung (16) abstützenden Sperrring (21) gesichert ist.

4. Wasserfilterbaugruppe (1) nach Anspruch 3, **dadurch gekennzeichnet, dass** die erste Richtung zur Flussrichtung des Wassers entgegengesetzt ist.

5. Wasserfilterbaugruppe (1) nach einem der Ansprüche 1 bis 2, **dadurch gekennzeichnet, dass** das Rückschlagventil (20) durch eine Deformation des Kupplungskörpers (13) gesichert ist.

6. Wasserfilterbaugruppe (1) nach Anspruch 1, **dadurch gekennzeichnet, dass** das Rückschlagventil (20) in der Durchgangsbohrung (16) reibschlüssig gehalten oder geklemmt ist.

7. Wasserfilterbaugruppe (1) nach einem der vorhergehenden Ansprüche, **dadurch gekennzeichnet, dass** das Rückschlagventil (20) in der Durchgangsbohrung (16) in einer zweiten Richtung durch eine Verengung (18) der Durchgangsbohrung (16) gesichert ist.

8. Kältegerät mit einer Wasserfilterbaugruppe (1) nach einem der vorhergehenden Ansprüche.

9. Kältegerät nach Anspruch 8, bei dem der Einlassanschluss (14) der Wasserfilterbaugruppe (1) außen am Kältegerät zugänglich ist.

10. Kältegerät nach Anspruch 8, bei dem der Einlassanschluss (14) der Wasserfilterbaugruppe (1) mit einem äußeren Einlassanschluss (14) über eine gerätefeste Leitung (37) verbunden ist und das Rückschlagventil (20) in der Durchgangsbohrung (14) entgegen der Flussrichtung des Wassers durch einen stromabwärtigen Kupplungskörper (40) der gerätefesten Leitung (37) gesichert ist.

## Claims

1. Water filter assembly (1) for a refrigeration appliance with an inlet connection (14), a filter head (2), on which a water filter (4) can be mounted, a non-return valve (20) and an outlet connection, wherein the non-return valve (20) is connected to the filter head (2) by way of a hose (7), **characterised in that** the non-return valve (20) is introduced into a through hole (16) of a coupling element (13) at the end of the hose (7), wherein the coupling element (13) forms the inlet connection (14).

2. Water filter assembly (1) according to claim 1, **characterised in that** the non-return valve (20) is secured in the through hole (16) in a form-fit manner.

3. Water filter assembly (1) according to one of claims 1 to 2, **characterised in that** the non-return valve (20) is secured in the through hole (16) in a first direction by a blocking ring (21) which is supported in a groove of the through hole (16).

4. Water filter assembly (1) according to claim 3, **characterised in that** the first direction opposes the flow direction of the water.

5. Water filter assembly (1) according to one of claims 1 to 2, **characterised in that** the non-return valve (20) is secured by a deformation of the coupling element (13).

6. Water filter assembly (1) according to claim 1, **characterised in that** the non-return valve (20) is held or clamped in the through hole (16) in a frictionally engaged manner.

7. Water filter assembly (1) according to one of the preceding claims, **characterised in that** the non-return valve (20) is secured in the through hole (16) in a second direction by a narrowing (18) of the through hole (16).

8. Refrigeration appliance having a water filter assembly (1) according to one of the preceding claims.

9. Refrigeration appliance according to claim 8, in which the inlet connection (14) of the water filter assembly (1) is accessible on the outside of the refrigeration appliance.

10. Refrigeration appliance according to claim 8, in which the inlet connection (14) of the water filter assembly (1) is connected to an outer inlet connection (14) by way of a line (37) fixed to the appliance and the non-return valve (20) in the through hole (14) is secured against the flow direction of the water by a downstream coupling element (40) of the line (37) fixed to the appliance.

## Revendications

1. Module de filtre à eau (1) pour un appareil frigorifique comprenant un raccordement d'entrée (14), une tête filtrante (2) à laquelle on peut assembler un filtre à eau (4), un clapet antiretour (20) et un raccordement de sortie, dans lequel le clapet antiretour (20) est raccordé à la tête filtrante (2) par le biais d'un tuyau (7), **caractérisé en ce que** le clapet antiretour (20) est inséré dans le trou traversant (16) d'un corps d'accouplement (13) à l'extrémité du tuyau (7), le corps d'accouplement (13) constituant le raccordement d'entrée (14).

2. Module de filtre à eau (1) selon la revendication 1, **caractérisé en ce que** le clapet antiretour (20) dans le trou traversant (16) est fixé par complémentarité de forme.

3. Module de filtre à eau (1) selon l'une des revendications 1 à 2, **caractérisé en ce que** le clapet antiretour (20) dans le trou traversant (16) est fixé dans un premier sens par une bague de blocage (21) s'appuyant dans une rainure du trou traversant (16).

4. Module de filtre à eau (1) selon la revendication 3, **caractérisé en ce que** le premier sens va à l'opposé du sens de courant de l'eau.

5. Module de filtre à eau (1) selon l'une des revendications 1 à 2, **caractérisé en ce que** le clapet antiretour (20) est fixé par une déformation du corps d'accouplement (13).

6. Module de filtre à eau (1) selon la revendication 1, **caractérisé en ce que** le clapet antiretour (20) dans le trou traversant (16) est maintenu ou calé par friction.

7. Module de filtre à eau (1) selon l'une des revendications précédentes, **caractérisé en ce que** le clapet antiretour (20) dans le trou traversant (16) est fixé dans un deuxième sens par un étranglement (18) du trou traversant (16).

8. Appareil frigorifique comprenant un module de filtre à eau (1) selon l'une des revendications précédentes.

9. Appareil frigorifique selon la revendication 8, dans lequel le raccordement d'entrée (14) du module de filtre à eau (1) est accessible à l'extérieur sur l'appareil frigorifique.

10. Appareil frigorifique selon la revendication 8, dans lequel le raccordement d'entrée (14) du module de filtre à eau (1) est raccordé à un raccordement d'entrée extérieur (14) par une conduite (37) inséparable de l'appareil et le clapet antiretour (20) dans le trou traversant (14) est fixé contre le sens de courant de l'eau par un corps d'accouplement (40) de la conduite (37) inséparable de l'appareil, en aval du courant.
